# EUROPEAN PATENT SPECIFICATION

(11) **EP 4 274 188 B1**
(45) Date of publication and mention of the grant of the patent: **06.03.2024**
(21) Application number: 22172189.7
(22) Date of filing: 06.05.2022
(51) Int. Cl.: H04L 65/1016, H04L 65/1045, H04L 65/1069, H04L 65/1073, H04L 41/0663

(54) **SWITCHOVER TO ANOTHER OUTBOUND P-CSCF INITIATED BY AN IMS OF A COMMUNICATION NETWORK**
UMSCHALTUNG AUF EINE ANDERE, DURCH EIN IMS EINES KOMMUNIKATIONSNETZES INITIIERTE AUSGEHENDE P-CSCF
BASCULEMENT VERS UNE AUTRE P-CSCF SORTANTE INITIÉ PAR UN IMS D'UN RÉSEAU DE COMMUNICATION

(43) Date of publication of application: 08.11.2023
(73) Proprietor: Deutsche Telekom AG, 53113 Bonn (DE)
(72) Inventor: BOUSSOUAB, Taoufik, 65929 Frankfurt (DE); GRIMM, Lothar, 79104 Freiburg (DE)
(74) Representative: RDL Patentanwälte PartG mbB

(56) References cited:
- WO-A1-2020/001734
- "3rd Generation Partnership Project; Technical Specification Group Core Network and Terminals; IMS Restoration Procedures (Release 17)", 3GPP STANDARD; TECHNICAL SPECIFICATION; 3GPP TS 23.380, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG4, no. V17.1.0 18 March 2022 (2022-03-18), pages 1-57, XP052144556, Retrieved from the Internet: URL:https://ftp.3gpp.org/Specs/archive/23_ series/23.380/23380-h10.zip 23380-h10.docx [retrieved on 2022-03-18]
- "3rd Generation Partnership Project; Technical Specification Group Services and System Aspects; IP Multimedia Subsystem (IMS); Stage 2 (Release 17)", 3GPP STANDARD; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. V17.3.0 23 December 2021 (2021-12-23), pages 1-354, XP052083247, Retrieved from the Internet: URL:https://ftp.3gpp.org/Specs/archive/23_ series/23.228/23228-h30.zip 23228-h30.docx [retrieved on 2021-12-23]
- "3rd Generation Partnership Project; Technical Specification Group Services and System Aspects; Policy and charging control framework for the 5G System (5GS); Stage 2 (Release 17)", 3GPP STANDARD; 3GPP TS 23.503, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. V17.3.0 23 December 2021 (2021-12-23), pages 1-144, XP052083267, Retrieved from the Internet: URL:https://ftp.3gpp.org/Specs/archive/23_ series/23.503/23503-h30.zip 23503-h30.docx [retrieved on 2021-12-23]
- "3rd Generation Partnership Project; Technical Specification Group Services and System Aspects; System architecture for the 5G System (5GS); Stage 2 (Release 17)", 3GPP STANDARD; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. V17.2.0 24 September 2021 (2021-09-24), pages 1-542, XP052056728, Retrieved from the Internet: URL:https://ftp.3gpp.org/Specs/archive/23_ series/23.501/23501-h20.zip 23501-h20.docx [retrieved on 2021-09-24]

## Description

The invention relates to a method for operating an IMS of a communication network, wherein a first terminal device connected to a communication network registers a first P-CSCF node of an IMS of the communication network with an S-CSCF of the IMS, a second terminal device connected to the communication network sends an IMS call request to the S-CSCF node, the IMS call request requesting an IMS call connection to the first terminal device, and the S-CSCF node receives the sent IMS call request and forwards the received IMS call request to the first P-CSCF node. The invention further relates to an IMS for a communication network, a communication network and a computer program product.

An IMS, i.e. an IP multimedia subsystem, is a component of a communication network and provides the communication network with an ability to support IP based multimedia call connections, i.e. IMS call connections, of terminal devices connected to the communication network. Voice over IP (VoIP) calls and video calls are exemplary multimedia call connections. As usual, the term internet protocol is abbreviated by IP herein.

The IMS comprises an S-CSCF (i.e. serving-call session control function) node for managing multimedia call connections and a plurality of P-CSCF (i.e. proxy-call session control function) nodes for facilitating a multimedia call connection.

A terminal device has to register a P-CSCF node of the communication network with the S-CSCF node in order to receive an IMS call, i.e. to be connected to by another terminal device via an IMS call connection. For connecting to the terminal device, the other terminal device sends an IMS call request, i.e. an IMS call invitation, to the S-CSCF node wherein the IMS call request indicates the terminal device. The S-CSCF node forwards the IMS call request to the registered P-CSCF node which, in turn, forwards the IMS call request to the terminal device. Therefore, the P-CSCF node my be called an outbound P-CSCF node. The IMS call connection is established when the terminal device accepts the IMS call.

However, the registered P-CSCF node may suffer from a failure and, hence, not forward the IMS call request to the terminal device. As a consequence, the terminal device does not receive any IMS call request, i.e. the terminal device cannot be connected to via an IMS call connection during a failure time of the registered P-CSCF.

Some terminal devices, after a predetermined time interval following a failure of the registered P-CSCF node, may automatically register another P-CSCF node with the S-CSCF node. Other terminal devices may not. In any case, the terminal device suffers from a loss of a passive IMS call connectivity for a certain time interval which is very tedious at least and may even be unacceptable for a user of the terminal device.

The technical specification 3GPP TS 23.380 V17.1.0, published by the technical specification group of the 3rd generation partnership project on 18-March-2022, discloses procedures required in 3GPP IMS to handle a S-CSCF or a P-CSCF service interruption.

The technical specification 3GPP TS 23.228 V17.3.0, published on 23-12-2021, discloses the service description of the IMS.

The technical specification 3GPP TS 23.503 V17.3.0, published on 23-12-2021, discloses the policy and charging control framework for the 5G system.

Document WO 2020/001734 A1 discloses a solution for restoration of a communication node, such as a P-CSCF, in a communication system.

It is, therefore, an object of the invention to provide a method for operating an IMS of a communication network which improves a connectivity of a terminal device for terminating IMS calls. Further objects of the invention are an IMS for a communication network, a communication network and a computer program product.

The invention is defined by the subject-matter of the independent claims; further details are defined by the dependent claims.

A first aspect of the invention is a method for operating an IMS of a communication network, wherein a first terminal device connected to a communication network registers a first P-CSCF node of an IMS of the communication network with an S-CSCF node of the IMS, a second terminal device connected to the communication network sends an IMS call request to an S-CSCF node of the IMS, the IMS call request requesting an IMS call connection to the first terminal device, and the S-CSCF node receives the sent IMS call request and forwards the received IMS call request to the first P-CSCF node. Registrations of first terminal devices enable the S-CSCF node for distributing incoming IMS call requests among the registered P-CSCF nodes dependent of the terminal devices indicated by the respective IMS call requests. In other words, the registrations allow the S-CSCF node for acting as a hub for IMS call requests of second terminal devices.

The communication network preferably is configured as a 4G cellular network, a 5G cellular network or any more advanced subsequent cellular network.

It is noted that the first terminal device is a called terminal device while the second terminal device is a calling terminal device. Of course, the roles may be readily swapped, i.e. the indications first and second are arbitrary and only distinguish the terminal devices participating in the IMS call connection.

According to the invention, the S-CSCF node, upon a failure of the first P-CSCF node, forwards the IMS call request to a second P-CSCF node of the IMS, the second P-CSCF node receives the forwarded IMS call request, checks a subscription of the first terminal device and, when the first terminal device is subscribed to a switchover service of the IMS, locates the first terminal device and sends a registration request to the located first terminal device, the first terminal device receives the sent registration request and registers with the second P-CSCF node, the second P-CSCF node forwards the received IMS call request to the first terminal device, and, the first terminal device receives the forwarded IMS call request and answers the requested IMS call request. The registration request requests the terminal device to register with the second P-CSCF. The S-CSCF node immediately provides a replacement for the failing first P-CSCF node in case the first terminal device has previously subscribed for the switchover service. The second P-CSCF node replaces the failing P-CSCF node and, hence, may be called a switchover P-CSCF node.

The proactive failure compensation which is initiated by the IMS of the communication network allows for a practically permanent connectivity of the first terminal device for terminating IMS calls. In other words, the first terminal device does not suffer from a long loss of the connectivity for terminating IMS calls.

In an embodiment, registering the first P-CSCF node comprises the first terminal device to send registration message to the first P-CSCF node, the first P-CSCF node to receive the sent registration message and to forward the received registration message to the S-CSCF node, the S-CSCF node to receive the forwarded registration message and to send a confirmation to the first P-CSCF node and the first P-CSCF node to receive the sent confirmation and to send a confirmation to the first terminal device. Registration of the first terminal device is accomplished two-step, i.e. the first P-CSCF node to be registered with the S-CSCF node forwards the registration message, i.e. registration data, to the S-CSCF node. The first terminal device does not directly communicate with the S-CSCF node.

A success of the registration, hence, depends on an availability and a proper function of the first P-CSCF node. Thus, a failure of the P-CSCF node is precluded at least during the registration.

In another embodiment, registering with the second P-CSCF node comprises the first terminal device to send a registration message to the second P-CSCF node and the second P-CSCF node to receive the sent registration message and to send a confirmation to the first terminal device. The second P-CSCF node may be registered with the S-CSCF. As a consequence, the connectivity of the first terminal device for terminating IMS calls may be provided by the second P-CSCF node even when the first P-CSCF node has returned available and properly functioning. Of course, in case the second P-CSCF is not registered with the S-CSCF or the first P-CSCF node is registered manually by an operator of the communication network the first P-CSCF node may alternatively keep on providing the first terminal device with said connectivity when the first P-CSCF node has returned available and properly functioning. The switchover registration of the first terminal device is less complex as compared with the original registration which increases an efficiency of the switchover service.

According to the invention, checking the subscription comprises requesting and receiving the registration message from an SDL of the communication network, the registration message indicating the subscription. The SDL, i.e. shared data layer, is a component of a 4G cellular network and a 5G cellular network allowing other components of the cellular network for easily storing data and accessing data stored therein.

According to the invention, registering the first P-CSCF node may comprise the first P-CSCF node to forward the received registration message to the SDL and the SDL to receive and to store the received registration message and to send an acknowledgment to the first P-CSCF node. The P-CSCF additionally stores the registration message received from the first terminal device in the SDL where the registration message is readily accessible for the second P-CSCF node.

Advantageously, the first terminal device, before the failure of the first P-CSCF node, subscribes to the switchover service. The switchover service enhances a passive IMS connectivity of terminal devices and may require a fee for being used.

Locating the first terminal device may comprise extracting an IP address as a location of the first terminal device from the registration message. IP addresses are basic locators in IP networks. The communication network is preferably configured as an IP network.

Preferably, a UDSF service of the SDL is requested and a UDR of the SDL provides the registration message. The UDR, i.e. unified data repository, and the UDSF, i.e. unstructured data storage function, are components of the SDL.

In some embodiments, fixed terminal devices and/or mobile devices connect to the communication network as the first terminal device and/or the second terminal device. The first terminal device and/or the second terminal device are connected to the communication network by fixed lines, i.e. network cables, or by wireless, i.e. radio, connections, respectively.

In a preferred embodiment, a terminal device of an emergency call center connects to communication network as the first terminal device. The emergency call center requires a permanent passive IMS call connectivity, e.g. VoIP connectivity, and, hence, the switchover service particularly benefits emergency call centers and the like.

Another aspect of the invention is an IMS for a communication network, comprising an S-CSCF node, a first P-CSCF node, a second P-CSCF node. The IMS is comprised by a plurality of communication networks. Therefore, the invention has many possible applications.

According to the invention, the IMS is configured for participating in a method according to an embodiment of the invention. The IMS allows for an improved passive IMS call connectivity of terminal devices.

A third aspect of the invention is a communication network, comprising an IMS. A plurality of communication networks comprise a IMS. Therefore, the invention has many possible applications.

According to the invention, the communication network comprises an IMS according to an embodiment of the invention. Due to the IMS, the communication network allows for an improved passive IMS call connectivity of terminal devices connected to the communication network.

According to the invention, the communication network comprises an SDL. The SDL is a component of a 4G cellular network and a 5G cellular network and allows other components of the cellular network for easily storing data and accessing data stored therein.

A fourth aspect of the invention is a computer program product, comprising a computer readable storage medium storing a program code, the program code being executable by a computing device. The storage medium may be configured to be a DVD (Digital Versatile Disk), a hard drive, a USB (Universal Serial Bus) stick, a memory chip of a computing device, an internet cloud and the like. According to the invention, the program code causes the computing device to participate as a P-CSCF node or an S-CSCF node of an IMS of a communication network in a method according to an embodiment of the invention when being executed by the computing device. The computer program product may upgrade an existing IMS to an inventive IMS. The computing device may execute the program code from the storage medium immediately or after a local installation thereof. The program code provides the IMS with a switchover service for replacing failing P-CSCF nodes.

Preferably, the program code provides the P-CSCF node with an API for accessing an SDL of the communication network and for sending a registration request to a terminal device. The API, i.e. application programming interface, allows the P-CSCF for accessing the SDL, on the one hand, and for proactively causing a registration of the terminal device, on the other hand.

It is an essential advantage of the invention that a passive IMS call connectivity for terminal devices is improved. The inventive switchover service allows for an optional subscription of terminal devices, the subscription requiring a fee.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention as defined by the subject-matter of the claims.

The invention is described in detail by means of an exemplary embodiment and with reference to the drawings.

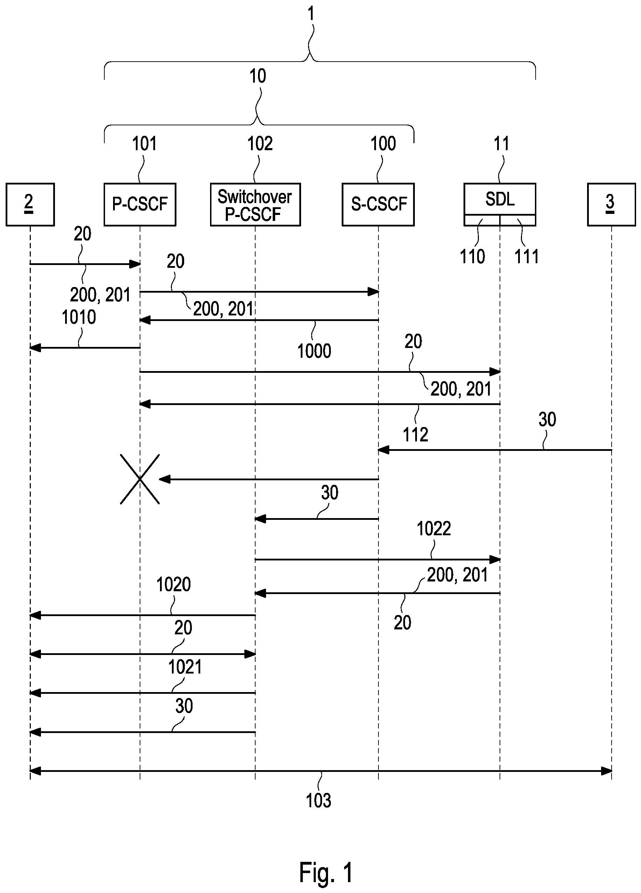

Fig. 1 schematically shows a structural diagram of a communication network according to an embodiment of the invention;
Fig. 1 schematically shows a structural diagram of a communication network 1 according to the invention. The communication network 1 comprises an IMS 10 and optionally an SDL 11. The SDL 11 may comprise a UDR 111 and a UDSF service 110.

A first terminal device 2 and a second terminal device 3 are connected to the communication network 1. Preferably, fixed terminal devices and/or mobile terminal devices connect to the communication network 1 as the first terminal device 2 and/or the second terminal device 3. Particularly, a terminal device of an emergency call center may connect to the communication network 1 as the first terminal device 2.

The IMS 10 is adapted for the communication network 1, comprises an S-CSCF node 100, a first P-CSCF node 101, a second P-CSCF node 102 and is configured for participating in a method according to an embodiment of the invention as follows.

The S-CSCF node 100 and each P-CSCF node 101, 102 may be implemented by means of a computer program product. The computer program product comprises a computer readable storage medium storing a program code. The program code is executable by a computing device and causes the computing device to participate as a P-CSCF node 101, 102 or the S-CSCF node 100 of the IMS 10 of the communication network 1 in the following method when being executed by the computing device.

The program code may provide the P-CSCF node with an API for accessing the SDL 11 of the communication network 1 and for sending a registration request 1020 to the first terminal device 2.

For operating the IMS 10 of the communication network 1, the first terminal device 2 connected to a communication network 1 registers the first P-CSCF node 101 of the IMS 10 of the communication network 1 with the S-CSCF node 100 of the IMS 10. Registering the first P-CSCF node may comprise the first terminal device 2 to send a registration message 20 to the first P-CSCF node 101, the first P-CSCF node 101 to receive the sent registration message 20 and to forward the received registration message 20 to the S-CSCF node 100, the S-CSCF node 100 to receive the forwarded registration message 20 and to send a confirmation 1000 to the first P-CSCF node 101 and the first P-CSCF node 101 to receive the sent confirmation 1000 and to send a confirmation 1010 to the first terminal device 2.

Before a failure of the first P-CSCF node 101, the first terminal device 2 may subscribe to a switchover service of the IMS 10.

Registering the first P-CSCF node 101 further comprises the first P-CSCF node 101 to forward the received registration message 20 to the SDL 11, and the SDL 11 to receive and to store the received registration message 20 and to send an acknowledgment 112 to the first P-CSCF node 101.

The second terminal device 3 connected to the communication network 1 sends an IMS call request 30 to the S-CSCF node 100, the IMS call request 30 requesting an IMS call connection 103 to the first terminal device 2.

The S-CSCF node 100 receives the sent IMS call request 30 and forwards the received IMS call request 30 to the first P-CSCF node 101.

The S-CSCF node 100, upon a failure of the first P-CSCF node 101, forwards the IMS call request 30 to a second P-CSCF node 102 of the IMS 10.

The second P-CSCF node 102 receives the forwarded IMS call request 30, checks a subscription 201 of the first terminal device 2 and, when the first terminal device 2 is subscribed to the switchover service of the IMS 10, locates the first terminal device 2 and sends a registration request 1020 to the located first terminal device 2.

Checking the subscription 201 comprises requesting and receiving the registration message 20 from the SDL 11 of the communication network 1, the registration message 20 indicating the subscription 201. An UDSF service 110 of the SDL 11 may be requested, i.e. may receive a data request 1022, and a UDR 111 of the SDL 11 may provide the registration message 20. Locating the first terminal device 2 comprises extracting an IP address 200 as a location of the first terminal device 2 from the registration message 20.

The first terminal device 2 receives the sent registration request and registers with the second P-CSCF node 102. Registering with the second P-CSCF node 102 may comprise the first terminal device 2 to send a registration message 20 to the second P-CSCF node 102, and the second P-CSCF node 102 to receive the sent registration message 20 and to send a confirmation 1021 to the first terminal device 2.

The second P-CSCF node 102 forwards the received IMS call request 30 to the first terminal device 2 and the first terminal device 2 receives the forwarded IMS call request 30 and answers the requested IMS call request 30.

### Reference Numerals

- 1: communication network
- 10: IMS
- 100: S-CSCF node
- 1000: confirmation
- 101: first P-CSCF node
- 1010: confirmation
- 102: second P-CSCF node
- 1020: registration request
- 1021: confirmation
- 1022: data request
- 103: IMS call connection
- 11: SDL
- 110: UDSF service
- 111: UDR
- 112: acknowledgment
- 2: first terminal device
- 20: registration message
- 200: IP address
- 201: subscription
- 3: second terminal device
- 30: IMS call request

## Claims

1. A method for operating an internet protocol, IP, multimedia subsystem, IMS, (10) of a communication network (1), wherein
- a first terminal device (2) connected to a communication network (1) registers a first proxy-call session control function, P-CSCF, node (101) of an IMS (10) of the communication network (1) with a serving-call session control function, S-CSCF, node (100) of the IMS (10), wherein registering the first P-CSCF node (101) comprises the first P-CSCF node (101) to forward a registration message (20) received from the first terminal device (2) to a shared data layer, SDL, (11) of the communication network (1), the registration message (20) indicating a subscription (201) to a switchover service of the IMS (10), and the SDL (11) to receive and to store the received registration message (20) and to send an acknowledgment (112) to the first P-CSCF node (101);
- a second terminal device (3) connected to the communication network (1) sends an IMS call request (30) to the S-CSCF node (100) of the IMS (10), the IMS call request (30) requesting an IMS call connection (103) to the first terminal device (2);
- the S-CSCF node (100) receives the sent IMS call request (30) and forwards the received IMS call request (30) to the first P-CSCF node (101);
- the S-CSCF node (100), upon a failure of the first P-CSCF node (101), forwards the IMS call request (30) to a second P-CSCF node (102) of the IMS (10);
- the second P-CSCF node (102) receives the forwarded IMS call request (30), checks the subscription (201) of the first terminal device (2), wherein checking the subscription (201) comprises requesting and receiving the registration message (20) from the SDL (11), and, when the first terminal device (2) is subscribed to the switchover service of the IMS (10), locates the first terminal device (2) and sends a registration request (1020) to the located first terminal device (2);
- the first terminal device (2) receives the sent registration request and then registers with the second P-CSCF node (102);
- the second P-CSCF node (102) forwards the received IMS call request (30) to the first terminal device (2),
- the first terminal device (2) receives the forwarded IMS call request (30) and answers the requested IMS call request (30).

2. The method according to claim 1, wherein registering the first P-CSCF node comprises
- the first terminal device (2) to send the registration message (20) to the first P-CSCF node (101);
- the first P-CSCF node (101) to receive the sent registration message (20) and to forward the received registration message (20) to the S-CSCF node (100);
- the S-CSCF node (100) to receive the forwarded registration message (20) and to send a confirmation (1000) to the first P-CSCF node (101);
- the first P-CSCF node (101) to receive the sent confirmation (1000) and to send a confirmation (1010) to the first terminal device (2).

3. The method according to claim 1 or 2, wherein registering with the second P-CSCF node (102) comprises
- the first terminal device (2) to send a registration message (20) to the second P-CSCF node (102);
- the second P-CSCF node (102) to receive the sent registration message (20) and to send a confirmation (1021) to the first terminal device (2).

4. The method according to one of claims 1 to 3, wherein the first terminal device (2), before the failure of the first P-CSCF node (101), subscribes to the switchover service.

5. The method according to one of claims 1 to 4, wherein locating the first terminal device (2) comprises extracting an IP address (200) as a location of the first terminal device (2) from the registration message (20).

6. The method according to one of claims 1 to 5, wherein a unstructured data storage function, UDSF, service (110) of the SDL (11) is requested and a unified data repository, UDR, (111) of the SDL (11) provides the registration message (20).

7. The method according to one of claims 1 to 6, wherein fixed terminal devices and/or mobile terminal devices connect to the communication network (1) as the first terminal device (2) and/or the second terminal device (3).

8. The method according to one of claims 1 to 7, wherein a terminal device of an emergency call center connects to the communication network (1) as the first terminal device (2).

9. An internet protocol, IP, multimedia subsystem, IMS, (10) for a communication network (1), comprising a serving-call session control function, S-CSCF, node (100), a first proxy-call session control function, P-CSCF, node (101), a second P-CSCF node (102) and being configured for performing a method according to one of claims 1 to 8.

10. A communication network (1), comprising the IMS (10) according to claim 9 and a shared data layer, SDL (11).

11. A computer program product, comprising a computer readable storage medium storing a program code, the program code being executable by a computing device and causing the computing device to participate as a proxy-call session control function, P-CSCF, node or a serving-call session control function, S-CSCF, node (100) of an internet protocol, IP, multimedia subsystem, IMS, (10) of a communication network (1) in a method according to one of claims 1 to 8 when being executed by the computing device.

12. The computer program product according to claim 11, wherein the program code provides the P-CSCF node with an application programming interface, API, for accessing a shared data layer, SDL, (11) of the communication network (1) and for sending a registration request (1020) to a terminal device (2, 3).

## Patentansprüche

1. Verfahren zum Betreiben eines Internetprotokoll (IP)-Multimedia-Subsystems (IMS) (10) eines Kommunikationsnetzwerks (1), wobei
- ein erstes mit einem Kommunikationsnetzwerk (1) verbundenes Endgerät (2) einen ersten Proxy-Call Session Control Function (P-CSCF)-Knoten (101) eines IMS (10) des Kommunikationsnetzwerks (1) bei einem Serving-Call Session Control Function (S-CSCF)-Knoten (100) des IMS (10) registriert, wobei das Registrieren des ersten P-CSCF-Knotens (101) umfasst, dass der erste P-CSCF-Knoten (101) eine von dem ersten Endgerät (2) empfangene Registrierungsnachricht (20) an einen Shared Data Layer (SDL) (11) des Kommunikationsnetzwerks (1) weiterleitet, wobei die Registrierungsnachricht (20) eine Subskription (201) für einen Switchover-Dienst des IMS (10) angibt, und die SDL (11) die empfangene Registrierungsnachricht (20) empfängt und speichert und eine Bestätigung (112) an den ersten P-CSCF-Knoten (101) sendet;
- ein zweites, mit dem Kommunikationsnetzwerk (1) verbundenes Endgerät (3) eine IMS-Anrufanforderung (30) an den S-CSCF-Knoten (100) des IMS (10) sendet, wobei die IMS-Anrufanforderung (30) eine IMS-Anrufverbindung (103) zu dem ersten Endgerät (2) anfordert;
- der S-CSCF-Knoten (100) die gesendete IMS-Anrufanfrage (30) empfängt und die empfangene IMS-Anrufanfrage (30) an den ersten P-CSCF-Knoten (101) weiterleitet;
- der S-CSCF-Knoten (100) bei einem Ausfall des ersten P-CSCF-Knotens (101) die IMS-Anrufanfrage (30) an einen zweiten P-CSCF-Knoten (102) des IMS (10) weiterleitet;
- der zweite P-CSCF-Knoten (102) die weitergeleitete IMS-Anrufanforderung (30) empfängt, die Subskription (201) des ersten Endgeräts (2) prüft, wobei das Prüfen der Subskription (201) das Anfordern und Empfangen der Registrierungsnachricht (20) von dem SDL (11) umfasst, und, wenn das erste Endgerät (2) für den Switchover-Dienst des IMS (10) subskribiert ist, das erste Endgerät (2) lokalisiert und eine Registrierungsanforderung (1020) an das lokalisierte erste Endgerät (2) sendet;
- das erste Endgerät (2) die gesendete Registrierungsanforderung empfängt und sich dann bei dem zweiten P-CSCF-Knoten (102) registriert;
- der zweite P-CSCF-Knoten (102) die empfangene IMS-Anrufanfrage (30) an das erste Endgerät (2) weiterleitet,
- das erste Endgerät (2) die weitergeleitete IMS-Anrufanfrage (30) empfängt und die angeforderte IMS-Anrufanfrage (30) beantwortet.

2. Verfahren nach Anspruch 1, wobei das Registrieren des ersten P-CSCF-Knotens umfasst, dass
- das erste Endgerät (2) die Registrierungsnachricht (20) an den ersten P-CSCF-Knoten (101) sendet;
- der erste P-CSCF-Knoten (101) die gesendete Registrierungsnachricht (20) empfängt und die empfangene Registrierungsnachricht (20) an den S-CSCF-Knoten (100) weiterleitet;
- der S-CSCF-Knoten (100) die weitergeleitete Registrierungsnachricht (20) empfängt und eine Bestätigung (1000) an den ersten P-CSCF-Knoten (101) sendet;
- der erste P-CSCF-Knoten (101) die gesendete Bestätigung (1000) empfängt und eine Bestätigung (1010) an das erste Endgerät (2) sendet.

3. Verfahren nach Anspruch 1 oder 2, wobei das Registrieren bei dem zweiten P-CSCF-Knoten umfasst, dass
- das erste Endgerät (2) eine Registrierungsnachricht (20) an den zweiten P-CSCF-Knoten (102) sendet;
- der zweite P-CSCF-Knoten (102) die gesendete Registrierungsnachricht (20) empfängt und eine Bestätigung (1021) an das erste Endgerät (2) sendet.

4. Verfahren nach einem der Ansprüche 1 bis 3, wobei sich das erste Endgerät (2) vor dem Ausfall des ersten P-CSCF-Knotens (101) für den Switchover-Dienst subskribiert.

5. Verfahren nach einem der Ansprüche 1 bis 4, wobei das Lokalisieren des ersten Endgeräts (2) das Extrahieren einer IP-Adresse (200) als Standort des ersten Endgeräts (2) aus der Registrierungsnachricht (20) umfasst.

6. Verfahren nach einem der Ansprüche 1 bis 5, wobei ein Unstructured Data Storage Function (UDSF)-Dienst (110) des SDL (11) angefordert wird und ein Unified Data Repository (UDR) (111) des SDL (11) die Registrierungsnachricht (20) bereitstellt.

7. Verfahren nach einem der Ansprüche 1 bis 6, wobei sich ortsfeste Endgeräte und/oder mobile Endgeräte als das erste Endgerät (2) und/oder das zweite Endgerät (3) mit dem Kommunikationsnetzwerk (1) verbinden.

8. Verfahren nach einem der Ansprüche 1 bis 7, wobei sich ein Endgerät einer Notrufzentrale als das erste Endgerät (2) mit dem Kommunikationsnetzwerk (1) verbindet.

9. Internetprotokoll (IP)-Multimedia-Subsystem (IMS) (10) für ein Kommunikationsnetzwerk (1), das einen Serving-Call Session Control Function (S-CSCF)-Knoten (100), einen ersten Proxy-Call Session Control Function (P-CSCF)-Knoten (101) und einen zweiten P-CSCF-Knoten (102) umfasst und zur Durchführung eines Verfahrens nach einem der Ansprüche 1 bis 8 konfiguriert ist.

10. Kommunikationsnetzwerk (1), das das IMS (10) gemäß Anspruch 9 und einen Shared Data Layer (SDL) (11) umfasst.

11. Computerprogrammprodukt, das ein computerlesbares Speichermedium umfasst, das einen Programmcode speichert, wobei der Programmcode von einem Computergerät ausgeführt werden kann und bewirkt, dass das Computergerät als Proxy-Call Session Control Function (P-CSCF)-Knoten oder als Serving-Call Session Control Function (S-CSCF)-Knoten (100) eines Internetprotokoll (IP)-Multimedia-Subsystems (IMS) (10) eines Kommunikationsnetzwerks (1) an einem Verfahren nach einem der Ansprüche 1 bis 8 teilnimmt, wenn es von dem Computergerät ausgeführt wird.

12. Computerprogrammprodukt nach Anspruch 11, wobei der Programmcode für den P-CSCF-Knoten ein Application Programming Interface (API) bereitstellt, um auf ein Shared Data Layer (SDL) (11) des Kommunikationsnetzwerks (1) zuzugreifen und eine Registrierungsanfrage (1020) an ein Endgerät (2, 3) zu senden.

## Revendications

1. Procédé d'exploitation d'un sous-système multimédia (IMS) à protocole Internet (IP) (10) d'un réseau de communication (1),
- un premier dispositif terminal (2) connecté à un réseau de communication (1) enregistrant un premier noeud de fonction de commande de session d'appel proxy, P-CSCF, (101) d'un IMS (10) du réseau de communication (1) auprès d'un noeud de fonction de commande de session d'appel de desserte, S-CSCF, (100) de l'IMS (10), l'enregistrement du premier noeud P-CSCF (101) comprenant la transmission par le premier noeud P-CSCF (101) d'un message d'enregistrement (20) reçu du premier dispositif terminal (2) à une couche de données partagées, SDL, (11) du réseau de communication (1), le message d'enregistrement (20) indiquant un abonnement (201) à un service de basculement de l'IMS (10), et la réception et le stockage du message d'enregistrement (20) reçu par la SDL (11) et l'envoi par celle-ci d'un accusé de réception (112) au premier noeud P-CSCF (101);
- un second dispositif terminal (3) connecté au réseau de communication (1) envoyant une demande d'appel IMS (30) au noeud S-CSCF (100) de l'IMS (10), la demande d'appel IMS (30) demandant une connexion d'appel IMS (103) au premier dispositif terminal (2);
- le noeud S-CSCF (100) recevant la demande d'appel IMS envoyée (30) et transmettant la demande d'appel IMS reçue (30) au premier noeud P-CSCF (101);
- le noeud S-CSCF (100), en cas de défaillance du premier noeud P-CSCF (101), transmettant la demande d'appel IMS (30) à un second noeud P-CSCF (102) de l'IMS (10);
- le second noeud P-CSCF (102) recevant la demande d'appel IMS (30) transmise, vérifiant l'abonnement (201) du premier dispositif terminal (2), la vérification de l'abonnement (201) comprenant la demande et la réception du message d'enregistrement (20) de la SDL (11) et, lorsque le premier dispositif terminal (2) est abonné au service de basculement de l'IMS (10), la localisation du premier dispositif terminal (2) et l'envoi d'une demande d'enregistrement (1020) au premier dispositif terminal (2) localisé;
- le premier dispositif terminal (2) recevant la demande d'enregistrement envoyée et s'enregistrant ensuite auprès du second noeud P-CSCF (102);
- le second noeud P-CSCF (102) transmettant la demande d'appel IMS (30) reçue au premier dispositif terminal (2),
- le premier dispositif terminal (2) recevant la demande d'appel IMS (30) transmise et répondant à la demande d'appel IMS (30) demandée.

2. Procédé selon la revendication 1, l'enregistrement du premier noeud P-CSCF comprenant
- l'envoi par le premier dispositif terminal (2) du message d'enregistrement (20) au premier noeud P-CSCF (101);
- la réception par le premier noeud P-CSCF (101) du message d'enregistrement (20) envoyé et la transmission du message d'enregistrement (20) reçu au noeud S-CSCF (100);
- la réception par le noeud S-CSCF (100) du message d'enregistrement (20) transmis et l'envoi d'une confirmation (1000) au premier noeud P-CSCF (101);
- la réception par le premier noeud P-CSCF (101) de la confirmation (1000) envoyée et l'envoi d'une confirmation (1010) au premier dispositif terminal (2).

3. Procédé selon la revendication 1 ou 2, l'enregistrement auprès du second noeud P-CSCF (102) comprenant
- l'envoi par le premier dispositif terminal (2) d'un message d'enregistrement (20) au second noeud P-CSCF (102);
- la réception par le second noeud P-CSCF (102) du message d'enregistrement (20) envoyé et l'envoi d'une confirmation (1021) au premier dispositif terminal (2).

4. Procédé selon l'une des revendications 1 à 3, le premier dispositif terminal (2) souscrivant, avant la défaillance du premier noeud P-CSCF (101), au service de basculement.

5. Procédé selon l'une des revendications 1 à 4, la localisation du premier dispositif terminal (2) comprenant l'extraction, du message d'enregistrement (20), d'une adresse IP (200) en tant qu'emplacement du premier dispositif terminal (2) .

6. Procédé selon l'une des revendications 1 à 5, un service de fonction de stockage de données non structurées, UDSF, (110) de la SDL (11) étant demandé et un référentiel de données unifié, UDR, (111) de la SDL (11) fournissant le message d'enregistrement (20).

7. Procédé selon l'une des revendications 1 à 6, des dispositifs terminaux fixes et/ou des dispositifs terminaux mobiles se connectant au réseau de communication (1) en tant que premier dispositif terminal (2) et/ou second dispositif terminal (3).

8. Procédé selon l'une des revendications 1 à 7, un dispositif terminal d'un centre d'appel d'urgence se connectant au réseau de communication (1) en tant que premier dispositif terminal (2).

9. Sous-système multimédia (IMS) à protocole Internet (IP) (10) pour un réseau de communication (1), comprenant un noeud de fonction de commande de session d'appel de desserte, S-CSCF, (100), un premier noeud de fonction de commande de session d'appel proxy, P-CSCF, (101), un second noeud P-CSCF (102) et configuré pour exécuter un procédé selon l'une des revendications 1 à 8.

10. Réseau de communication (1) comprenant l'IMS (10) selon la revendication 9 et une couche de données partagées, SDL, (11).

11. Produit de programme informatique comprenant un support de stockage lisible par ordinateur stockant un code de programme, le code de programme étant exécutable par un dispositif informatique et amenant le dispositif informatique à participer en tant que noeud de fonction de commande de session d'appel proxy, P-CSCF, ou noeud de fonction de commande de session d'appel de desserte, S-CSCF, (100) d'un sous-système multimédia (IMS) à protocole Internet (IP) (10) d'un réseau de communication (1) dans un procédé selon l'une des revendications 1 à 8 lorsqu'il est exécuté par le dispositif informatique.

12. Produit de programme informatique selon la revendication 11, le code de programme fournissant au noeud P-CSCF une interface de programmation d'application, API, pour accéder à une couche de données partagées, SDL, (11) du réseau de communication (1) et pour envoyer une demande d'enregistrement (1020) à un dispositif terminal (2, 3).
